# EUROPÄISCHE PATENTSCHRIFT

(11) **EP 0 414 659 B1**
(45) Veröffentlichungstag und Bekanntmachung des Hinweises auf die Patenterteilung: **27.07.1994**
(21) Anmeldenummer: 90890242.2
(22) Anmeldetag: 13.08.1990
(51) Int. Cl.: A47B 17/00, A47B 13/00, F16B 12/20

(54) **Anordnung zur lösbaren Festlegung von Verkleidungs- und/oder Abdeckplatten an Tragelementen**
Arrangement for releasable assembly of lining and/or covering plates to supporting elements
Configuration pour assembler de manière amovible des panneaux de garnissage et/ou de recouvrement sur des éléments de support

(30) Priorität: 22.08.1989 AT 1983/89
(43) Veröffentlichungstag der Anmeldung: 27.02.1991
(73) Patentinhaber: SVOBODA ENTWICKLUNGS KG, A-3100 St. Pölten (AT)
(72) Erfinder: Svoboda, Rudolf, Dipl.-Ing., A-3100 St. Pölten (AT); Zagler, Helmut, A-3161 St. Veit (AT); Scheer, Johann, A-3380 Pöchlarn (AT)
(74) Vertreter: Itze, Peter, Dipl.-Ing.

(56) Entgegenhaltungen:
- FR-A- 2 098 820
- GB-A- 965 052

## Beschreibung

Die Erfindung bezieht sich auf eine Anordnung zur lösbaren Festlegung von Verkleidungs- und/oder Abdeckplatten an Tragelementen, wobei die Platte an dem Tragelement gegen Verschieben gesichert und durch einen parallel zur Plattenebene verdrehbaren Riegel gegen Abheben festlegbar ist. Solche Ausbildungen sind allgemeiner Stand der Technik.

Bei Möbelstücken, Verkleidungen u.dgl. stellt sich nämlich des öfteren das Problem, sich zu dem verkleideten Raum bzw. zu dem abgedeckten Bereich der Möbelstücke Zutritt zu verschaffen, z.B. um Wartungsarbeiten in Kabelführungen od.dgl. durchführen zu können. Insbesondere bei Möbelstücken, in welchen Leitungen zu Computerterminals oder Bildschirmen eingebaut sind, ist dies oft der Fall, wobei diese Kabel auch durch feststehende Teile der Möbelstücke, also durch Eckverbauten u.dgl., in einem Kabelschacht geführt werden müssen. Bei Austausch von Kabeln bzw. bei Verlegung zusätzlicher Kabel muß allerdings der Kabelschacht dann durch Abnehmen der Tischplatte zugänglich gemacht werden. Bisher sind die Tischplatten am Rahmen bzw. an einem sonstigen Tragelement durch Anschrauben befestigt worden. Eine solche Ausbildung hat den Nateil, daß, abgesehen von der umständlichen Handhabbarkeit, auch noch der Umstand dazukommt, daß diese Verkleidungsplatten bzw. Abdeckplatten von Möbeln aus Holz gefertigt sind, so daß sich ein Herausschrauben und Wiedereinschrauben von Holzschrauben nicht beliebig oft wiederholen läßt, da dann alsbald das die Schrauben aufnehmende Schraubenloch ausgearbeitet ist, so daß die Schrauben darin keinen Halt mehr finden. Außerdem ist zu bedenken, daß das Einschrauben von Holzschrauben in derartige Platte nur bedingt möglich ist, weil die Holzschrauben aufgrund der vorgegebenen Dicke der Platten nur ein relativ geringes Eingreifen in das tieferliegende Holz ermöglichen.

Der Erfindung liegt die Aufgabe zugrunde, eine Anordnung der eingangs genannten Art zu schaffen, welche ein beliebig oftes Lösen und Festlegen der Verkleidungs- und/oder Abdeckplatte an Tragelementen ermöglicht, wobei diese Anordnung auch für den Einsatz an dünnwandigen Verkleidungs- und/oder Abdeckplatten einsetzbar sein soll.

Erfindungsgemäß wird diese Aufgabe dadurch gelöst, daß der Riegel als an einer an dem Tragelement bzw. der Verkleidungs- und/oder Abdeckplatte angeordneten Tragplatte drehbare Scheibe ausgebildet ist, die an ihrer Peripherie eine Ausnehmung aufweist, durch welche ein von der Verkleidungs- und/oder Abdeckplatte bzw. dem Tragelement etwa parallel zur Scheibenebene wegragender Halteteil, z.B. eine Lasche, quer zur Scheibenebene durchbewegbar ist, wobei bei an dem Tragelement in Anlage befindlicher Verkleidungs- und/oder Abdeckplatte der Abstand der dem Halteteil zugewandten Fläche der Scheibe von dem sie tragenden Teil, also dem Tragelement bzw. der Verkleidungs- und/oder Abdeckplatte, nur geringfügig größer ist als der Abstand der der Scheibe zugewandten Fläche des Halteteiles von diesem tragenden Teil, also der Verkleidungs- und/oder Abdeckplatte bzw. dem Tragelement. Dadurch wird erreicht, daß die Scheibe unabhängig von den Befestigungen an der Verkleidungs- und/oder Abdeckplatte frei drehbar ist, wobei die Befestigung an der Platte beim Drehen der Scheibe nicht mehr belastet wird. Aufgrund der Ausbildung ist ein einfaches Montieren möglich, da lediglich die Ausnehmung in eine Position zu bringen ist, in der der Halteteil durch sie hindurchbewegbar ist, wonach dann durch Verdrehen der Scheibe um einen beliebigen Winkel (ausgenommen 360°) ein Festlegen der Platte an dem Tragelement erreicht wird. Aufgrund der Tatsache, daß der Abstand der dem Halteteil zugewandten Fläche der Scheibe von dem sie tragenden Teil nur geringfügig größer ist als der Abstand der der Scheibe zugewandten Fläche des Halteteiles von diesem tragenden Teil, wird ein lagegenaues Festlegen erreicht, was insbesondere bei Tischplatten wichtig ist, da es sonst zu einem Wegkippen der Tischplatte bei einseitiger Belastung kommen kann. Auch bei vertikal angeordneten Verkleidungs- und/oder Abdeckplatten ist ein lagegenaues Festlegen wesentlich, da es sonst zu Verschiebungen kommen kann, bei welchen die Verkleidungsplatten aus der Fluchtlinie benachbarter Platten bewegt werden.

Vorteilhafterweise kann parallel zu der mit der Ausnehmung versehenen Scheibe in Einlegerichtung des Halteteils hinter dieser zusätzlich eine volle Scheibe am Riegel vorgesehen sein, die von der mit der Ausnehmung versehenen Scheibe geringfügig mehr als die Dicke des Halteteiles entfernt ist. Dadurch wird ein Festlegen des Halteteiles in beide Richtungen erzielt, so daß dadurch ein Festlegen von Verkleidungs- und/oder Abdeckplatten ermöglicht ist, ohne daß an den Tragelementen entsprechende Gegenauflageflächen vorgesehen sind. Dabei können die Scheiben miteinander verbunden bzw. unter Bildung einer peripheren Rille einstückig sein, wobei beide Scheiben entlang eines Schraubengewindes zu dem sie tragenden Teil hin bzw. von diesem weg bewegbar sind. Auf diese Weise ist es möglich, durch Verdrehen des Riegels entlang des Schraubengewindes eine Einstellung der Entfernung der Verkleidungs- und/oder Abdeckplatte zu erzielen, da der Halteteil in der Rille so gehalten bzw. geführt wird, daß er bei Verdrehen des Riegels zum Tragelement hin bzw. von jenem weg bewegt wird. Schließlich kann am Riegel eine Rasteinrichtung zum Halten des Riegels in der Offenstellung bzw. in der Geschlossenstellung angreifen. Dadurch wird erreicht, daß ein selbsttätiges Verstellen des Riegels beim montieren bzw. beim montierten Zustand verhindert ist, wodurch einerseits die Montage erleichtert und andererseits sichergestellt ist, daß sich die Verkleidungsplatte nicht selbsttätig löst.

In der Zeichnung ist ein Ausführungsbeispiel des Erfindungsgegenstandes dargestellt.

Fig. 1 zeigt schematisch eine Ecktisch-Kombination, wobei die Eckverbindungsplatte mittels der erfindungsgemäßen Verriegelungsanordnung festzulegen ist.

Fig. 2 zeigt eine Draufsicht auf das Tragelement der Tischplatten.

Fig. 3 zeigt eine Detaildarstellung gemäß Kreis X der Fig. 2, und zwar zeigt sie in Draufsicht die erfindungsgemäße Verriegelungsanordnung in Offenstellung des Riegels bei eingesetztem Halteelement.

Fig. 4 ist ein Schnitt nach Linie IV-IV der Fig. 3.

Fig. 5 gibt eine der Fig. 3 analoge Darstellung, jedoch bei geschlossenem Riegel, wieder.

Fig. 6 zeigt einen Schnitt nach Linie VI-VI der Fig. 5.

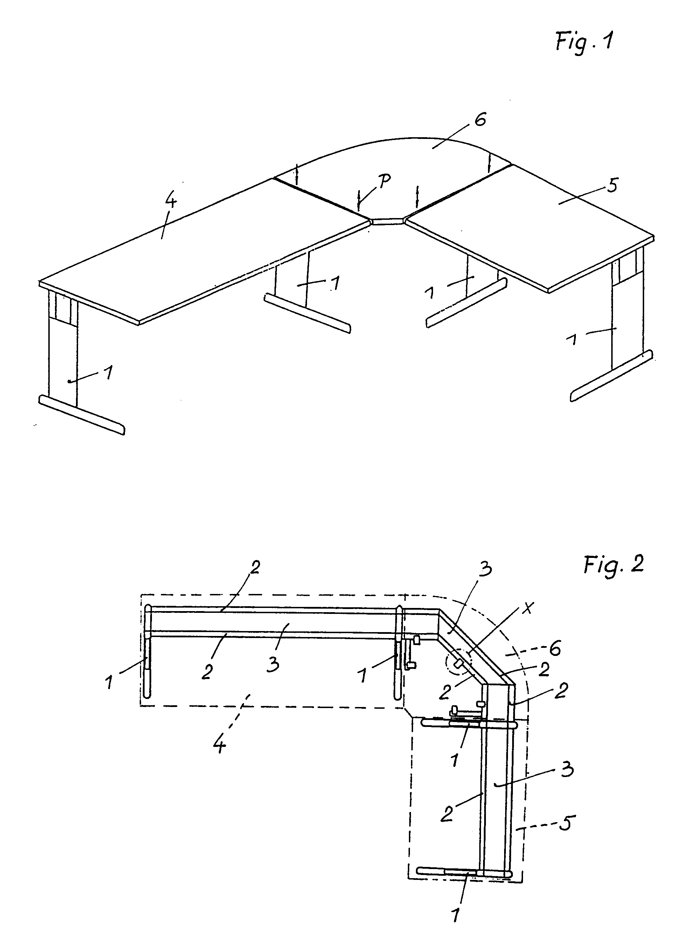

Bei der Tischanordnung gemäß Fig. 1 sind mit 1 Tragfüße bezeichnet, welche untereinander durch horizontale Träger 2 starr verbunden sind. Diese horizontalen Träger 2 sind aus Fig. 2 ersichtlich. Die horizontalen Träger 2 begrenzen seitlich einen Kabelkanal 3, welcher bei den rechteckigen Tischteilen 4, 5 geradlinig verläuft. Im Bereich der Eckverbindungsplatte 6 ist der Kabelkanal abgewinkelt, und zwar vorliegend, wie aus Fig. 2 ersichtlich, zweimal, um so eine gute Auflage der Eckverkleidungsplatte 6 zu erzielen. Wie in Fig. 1 durch Pfeile P angedeutet, ist die Eckverbindungsplatte lösbar festgelegt. Die horizontalen Träger 2 bilden somit das Tragelement, an welchem die Festlegung der Abdeckplatte, vorliegend also der Eckverbindungsplatte 6, erfolgt.

Für die Festlegung der Eckverbindungsplatte 6 am horizontalen Träger 2 ist ein Riegel vorgesehen, der mit einem Halteelement 8 zusammenwirkt. Der Riegel 7 ist dabei durch eine Scheibe 9 gebildet, in welcher eine Ausnehmung 10 vorgesehen ist, durch welche das Halteelement 8 quer zur Ebene der Scheibe hindurchsteckbar ist. Parallel zur Scheibe 9 ist eine zweite Scheibe 11 vorgesehen, welche über den gesamten Umfang voll ausgebildet ist. Zwischen beiden Scheiben 9 und 11 ist eine Rille 12 vorgesehen, welche um den gesamten Riegel umläuft. Die Breite der Rille 12 entspricht dabei im wesentlichen der Dicke des Halteelementes 8. Die Scheiben 9 und 11 sind einstückig ausgebildet und weisen einen Gewindestift 13 auf, an welchem sie drehschlüssig befestigt sind. Dieser Gewindestift 13 ist in einen Gewindeteil 14 einer Tragplatte 15 einschraubbar. Am Ende des Gewindestiftes 13 ist nach Einschrauben desselben in den Gewindeteil 14 eine Haltescheibe 16 aufgesetzt, die ein Herausfallen des Gewindestiftes aus dem Gewindeteil 14 verhindert. Der Riegel 7 weist an seinem von der Tragplatte 15 wegweisenden Teil einen Handgriff 17 auf, mit welchem die Scheiben verdrehbar sind.

Das Halteelement 8 ist vorliegend als Winkellasche ausgebildet, dessen einer Schenkel das Halteelement 8 bildet, und dessen anderer Schenkel 18 zur Befestigung am horizontalen Träger 2 mittels einer Halteschraube 19 dient.

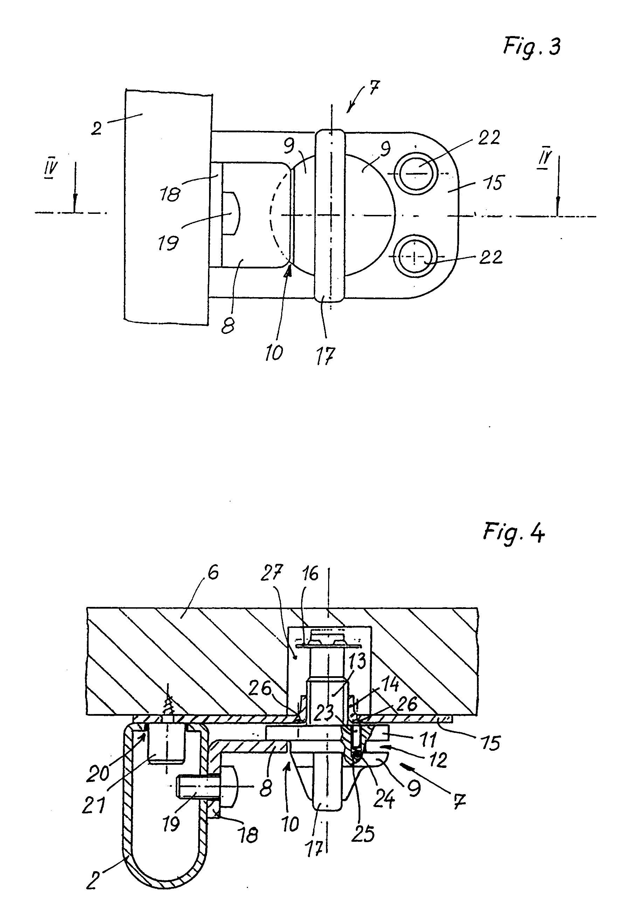

An der der Tischplatte zugewandten Seite ist im horizontalen Träger eine Ausnehmung 20 vorgesehen, in welche ein Fixierstift 21 einsetzbar ist, der von der Tischplatte parallel zum Gewindestift 13 des Riegels wegragt. Durch diesen Fixierstift, dessen Außendurchmesser etwa dem Innendurchmesser der Ausnehmung 20 entspricht, wird die Tischplatte in bezug auf den horizontalen Träger gegen seitliches Verschieben gesichert. Wie aus Fig. 4 ersichtlich, ist in vorliegendem Fall der Fixierstift 21 an der Tragplatte 15 mitbefestigt, so daß die Riegelanordnung und die Fixierstiftanordnung eine Befestigungseinheit bildet, die als ein Stück an der Tischplatte befestigt wird. Die Befestigung erfolgt dabei mittels Schrauben 22.

In dem Riegel 7 ist eine Rasteinrichtung vorgesehen, welche durch einen Raststift 23 gebildet ist, der in einer Bohrung 24 des Riegelknopfes geführt ist und mittels einer Feder 25 im Sinne eines nach außen Bewegens belastet ist. In der Tragplatte 15 sind Rastvertiefungen 26 vorgesehen, in welche der Raststift je nach Stellung des Riegels 7 einrasten kann.

Wie aus Fig. 4 ersichtlich, ist die gesamte Verriegelungseinheit an der Eckverbindungsplatte 6, und zwar an deren Unterseite, befestigt, wobei an dieser Platte ein Sackloch 27 vorgesehen ist, in welches der den Gewindeteil und den Gewindestift aufweisende Bereich der Verriegelungseinrichtung eingreift.

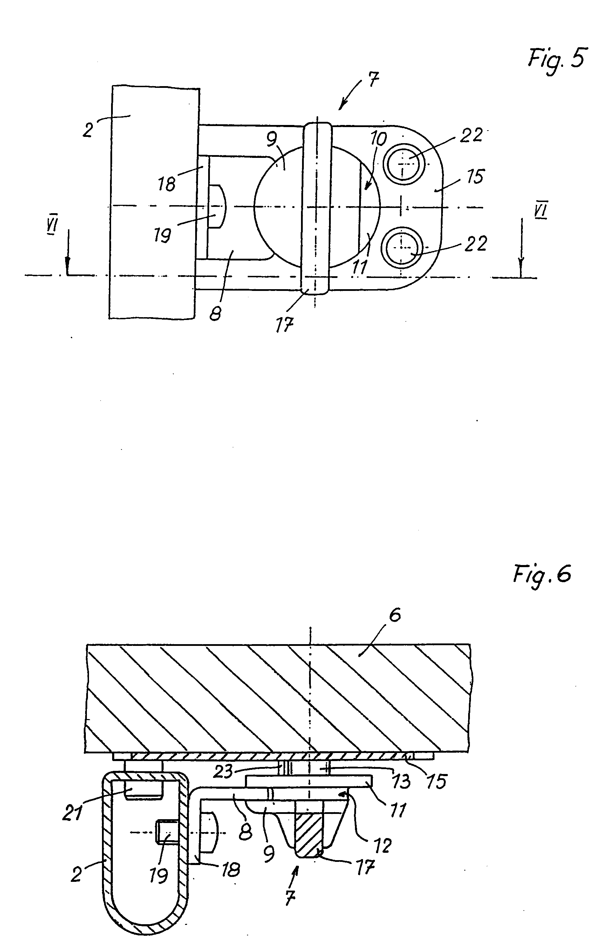

Zur Festlegung einer Verkleidungsplatte, vorliegend einer Eckverbindungsplatte 6, wird diese Eckverbindungsplatte, die an der Unterseite mit der erfindungsgemäßen Verriegelungsanordnung versehen ist, so auf den horizontalen Träger 2 aufgesetzt, daß der Fixierstift 21 in die zugehörige Ausnehmung 20 hineingleitet. Der Riegel 7 weist dabei jene Stellung auf, daß die Ausnehmung 10 dem Halteelement 8 zugewandt ist, so daß das Halteelement 8 durch diese Ausnehmung hindurch in die Rille 12 eingreifen kann, wobei es dann auf der durch die volle Scheibe 11 gebildete Rillenflanke aufliegt. Der Riegel 7 wird nun mittels des Handgriffes 17 um 180° gedreht, wodurch dann das Halteelement 8 zwischen den beiden Scheiben 9 und 11 höhenmäßig festgelegt ist (siehe dazu Fig. 6) . Soll die Tischplatte in bezug auf den horizontalen Träger etwas abgehoben werden, dann wird der Gewindestift 13 in dem Gewindeteil 14 im Sinne eines Herausschraubens gedreht, so daß über die durch die Scheibe 11 gebildete Flanke der Rille 12 der Halteteil von der Tischplatte 6 wegbewegt wird, wodurch ein Anheben dieser Eckverbindungsplatte 6 von dem horizontalen Träger 2 erreicht ist. Eine derartige Stellung geht gleichfalls aus Fig. 6 hervor. Die erfindungsgemäße Verriegelungsanordnung dient somit gleichzeitig sowohl zum Fixieren als auch zum Justieren einer Verkleidungs- und/oder Abdeckplatte in bezug auf das sie tragende Element.

Soll eine derartige Platte, z.B. zur Zugänglichmachung des Kabelkanals, abgehoben werden, dann wird der Riegel 7 mittels des Handgriffes 17 in die in den Fig. 3 und 4 wiedergegebene Stellung verdreht, in welcher er dann über die Rasteinrichtung 23 bis 26 gehalten ist, wonach dann die Verkleidungsplatte abgehoben werden kann, da das Halteelement 8 durch die Ausnehmung 10 hindurch aus der Rille 12 herausgleiten kann.

## Patentansprüche

1. Anordnung zur lösbaren Festlegung von Verkleidungs- und/oder Abdeckplatten an Tragelementen, wobei die Platte (6) an dem Tragelement (2) gegen Verschieben gesichert und durch einen parallel zur Plattenebene verdrehbaren Riegel (7) gegen Abheben festlegbar ist, dadurch gekennzeichnet, daß der Riegel (7) als an einer an dem Tragelement (2) bzw. der Verkleidungs- und/oder Abdeckplatte (6) angeordneten Tragplatte (15) drehbare Scheibe (9) ausgebildet ist, die an ihrer Peripherie eine Ausnehmung (10) aufweist, durch welche ein von der Verkleidungs- und/oder Abdeckplatte (6) bzw. dem Tragelement (2) etwa parallel zur Scheibenebene wegragender Halteteil (8), z.B. eine Lasche, quer zur Scheibenebene durchbewegbar ist, wobei bei an dem Tragelement (2) in Anlage befindlicher Verkleidungs- und/oder Abdeckplatte (6) der Abstand der dem Halteteil (8) zugewandten Fläche der Scheibe (9) von dem sie tragenden Teil, also dem Tragelement (2) bzw. der Verkleidungs- und/oder Abdeckplatte (6), nur geringfügig größer ist als der Abstand der der Scheibe (9) zugewandten Fläche des Halteteiles (8) von diesem tragenden Teil, also der Verkleidungs- und/oder Abdeckplatte (6) bzw. dem Tragelement (2).

2. Anordnung nach Anspruch 1, dadurch gekennzeichnet, daß parallel zu der mit der Ausnehmung (10) versehenen Scheibe (9), in Einlegerichtung des Halteteiles (8) hinter dieser, zusätzlich eine volle Scheibe (11) am Riegel (7) vorgesehen ist, die von der mit der Ausnehmung (10) versehenen Scheibe (9) geringfügig mehr als die Dicke des Halteteiles (8) entfernt ist.

3. Anordnung nach Anspruch 2, dadurch gekennzeichnet, daß beide Scheiben (9, 11) miteinander verbunden bzw. unter Bildung einer peripheren Rille (12) einstückig sind, wobei beide Scheiben (9, 11) entlang eines Schraubengewindes (13, 14) zu dem sie tragenden Teil (2) hin bzw. von diesem weg bewegbar sind.

4. Anordnung nach einem der Ansprüche 1 bis 3, dadurch gekennzeichnet, daß am Riegel (7) eine Rasteinrichtung (23 - 26) zum Halten des Riegels (7) in der Offenstellung bzw. in der Geschlossenstellung angreift.

## Claims

1. An arrangement for the detachable fixing of facing and/or cover plates onto support members, the plate (6) being secured against displacement to the support member (2) and being securable against removal by a latch (7) which is rotatable parallel to the plane of the plate, characterised in that the latch (7) is constructed as a disk (9) which is rotatable on a supporting plate (15) arranged on the support member (2) of the facing and/or cover plate (6), said disk having, on its circumference, a recess (10) through which a retaining part (8), for example a tongue, which projects from the facing and/or cover plate (6) or the support member (2) so as to be parallel to the plane of the disk, may be moved transversely to the plane of the disk, the spacing between the disk (9) face, confronting the retaining part (8), and the part carrying the disk, i.e. the supporting part (2) or the facing and/or cover plate (6), in the case of a facing and/or cover plate abutting the support member (2), being only slightly greater than the spacing between the face of the retaining part (8), confronting the disk (9), and said supporting part, i.e. the facing and/or cover plate (6) or the support member (2).

2. An arrangement according to Claim 1, characterised in that, parallel to the disk (9) provided with the recess (10), there is, in the insertion direction of the retaining part (8) behind the disk (9), additionally, a complete disk (11) on the latch (7), the spacing of which disk (11) from the disk provided with the recess is slightly greater than the thickness of the retaining part (8).

3. An arrangement according to Claim 2, characterised in that both disks (9, 11) are integrally connected with one another while forming a circumferential groove (12), both disks (9, 11) being movable along a screw thread (13, 14) in the direction of the part (2) supporting them or away therefrom.

4. An arrangement according to one of Claims 1 to 3, characterised in that a catching device (23 - 26) for retaining the latch (7) in the open position or in the closed position engages on the latch (7).

## Revendications

1. Disposition pour la fixation amovible de plaques d'habillage et/ou de recouvrement sur des éléments porteurs, la plaque (6) étant empêchée de glisser sur l'élément porteur (2) et pouvant être fixée par un verrou (7) orientable rotatif parallèlement à la surface de la plaque pour éviter qu'elle ne se soulève,
caractérisée en ce que le verrou (7) se présente sous forme d'un disque (9) pivotant sur une plaque porteuse (15) disposée sur l'élément porteur (2) ou la plaque d'habillage et/ou de recouvrement (6), lequel disque présente sur sa périphérie un évidemment (10), au moyen duquel une pièce de retenue (8), par exemple une éclisse, tournée, presque parallèlement au plan de la plaque, dans le sens opposé à la plaque d'habillage et/ou de recouvrement (6) ou l'élément porteur (2), peut être déplacée perpendiculairement au plan de la plaque,
étant précisé que, lorsque la plaque d'habillage et/ou de recouvrement (6) est montée sur l'élément porteur (2), la distance entre la surface du disque (9) tournée vers la pièce de retenue (8) et la pièce qui la porte, c'est à dire l'élément porteur (2) ou la plaque d'habillage et/ou de recouvrement (6), n'est que légèrement plus grande que la distance entre la surface de la pièce de retenue (8) tournée vers le disque (9) et cette pièce portante, à savoir la plaque d'habillage et/ou de recouvrement (6), ou l'élément porteur (2).

2. Disposition selon la revendication 1, caractérisée en ce qu'il est prévu, en supplément sur le verrou (7), un disque plein (11) parallèle au disque (9) pourvu de l'évidemment (10), dans le sens de l'introduction de la pièce de retenue (8) derrière celle-ci, l'écart entre celui-ci et le disque étant légèrement plus grand que l'épaisseur de la pièce de retenue (8).

3. Disposition selon la revendication 2, caractérisée en ce que les deux disques (9, 11) sont reliés entre eux ou sont d'une seule pièce en formant une gorge périphérique, les deux disques (9, 11) pouvant être rapprochés ou éloignés de l'élément qui les porte (2) sur un filetage de vis (13, 14).

4. Disposition selon l'une quelconque des revendications 1 à 3, caractérisée en ce qu'un dispositif à cran (23-26) est monté sur le verrou servant à maintenir le verrou (7) dans la position ouverte ou la position fermée.
